# EUROPEAN PATENT APPLICATION

(11) **EP 2 993 503 A1**
(43) Date of publication of application: **09.03.2016**
(21) Application number: 13849970.2
(22) Date of filing: 29.11.2013
(51) Int. Cl.: G02B 6/42

(54) **SINGLE OPTICAL FIBRE COUPLED MULTI-WAVELENGTH LIGHT TRANSCEIVING MODULE**

(30) Priority: 08.11.2013 CN 201310551689
(71) Applicant: O-Net Communications (Shenzhen) Limited, Pingshan New District Shenzhen Guangdong 518118 (CN)
(72) Inventor: CHEN, Bin, Guangdong 518118 (CN); XU, Haibo, Guangdong 518118 (CN); LI, Liancheng, Guangdong 518118 (CN)
(74) Representative: Beetz & Partner mbB
(86) International application number: PCT/CN2013/088111
(87) International publication number: WO 2015/066948

(57) **Abstract**

The present patent application discloses a single-fiber coupled multi-wavelength optical transceiver, comprising a fiber ferrule, a circulator subassembly, a multiplexer/demultiplexer subassembly, an optical transmitting subassembly and an optical receiving subassembly. The circulator subassembly comprises three ports. The optical transceiver comprises an optical receiving unit and an optical transmitting unit. The light beams of the optical receiving unit incidents from the fiber ferrule to the first port of the circulator, then output to multiplexer/demultiplexer through the second port of the circulator subassembly. The light beams is then split by the multiplexer/de-multiplexer and received by the receiver optical subassembly. The light beams of the transmitting unit input to the multiplexer/de-multiplexer from the transmitter optical subassembly. After combined by the multiplexer/de-multiplexer, the light beams incident into the third port of the circulator subassembly. Then the light beams output from the first port of the circulator subassembly and input to the fiber ferrule. The present application avoids the fiber coiling risk of existing optical transceiver and meets the requirement of miniaturization.

## Description

### Technical field

The present patent application relates to the field of optical communication, particularly relates QSFP+ single-fiber coupled multi-wavelength optical transceiver module for fiber transmission.

### Background

In recent years with the popularity of broadband networks, the various levels of equipment (devices) in data centers need to achieve high-speed Interconnection. To realize low cost, low power consumption and high density transmission, the core routers oriented outside network use QSFP + modules as transmission port in the transmission. The QSFP+ module will be gradually extended to the switch and server level in later period.

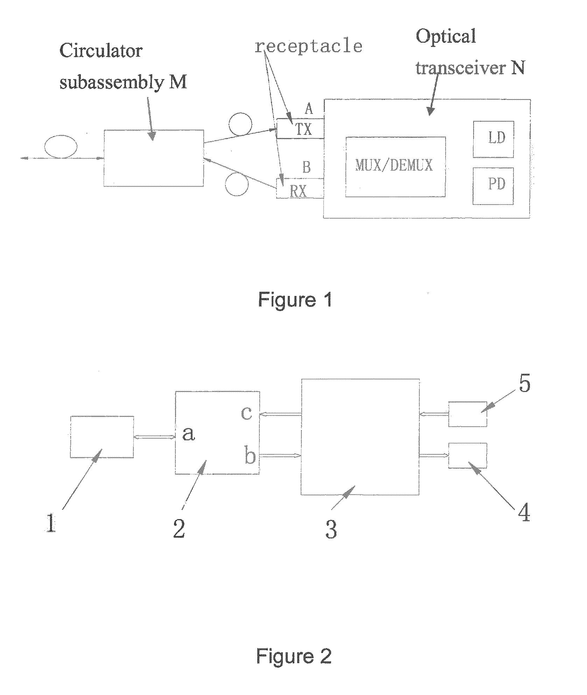

Existing QSFP+ modules are used in dual-fiber coupled multi-wavelength optical transceiver modules as shown in Figure 1. Figure 1 is a schematic diagram of an existing optical transceiver module. The optical transceiver module contains input port A and output port B. Ports A and B are connected with input and output fiber respectively. The dual-fiber of input and output are connected to the circulator subassembly M. The fiber coiling of dual-fibers has risk. In addition, the circulator subassembly M is mounted outside the optical transceiver module N. This caused high volume of the entire QSFP+ module.

### Summary

In order to solve the fiber coiling risk of the existing dual-fiber coupled multi-wavelength optical transceiver module, the present patent application provides a single-fiber coupled multi-wavelength optical transceiver module. Another object of the present patent application is to provide a single-fiber coupled multi-wavelength optical transceiver modules to meet the requirement of miniaturization.

The single-fiber coupled multi-wavelength optical transceiver, comprise a fiber ferrule, an circulator subassembly, a multiplexer/demultiplexer subassembly, an optical transmitting subassembly and an optical receiving subassembly, wherein the circulator subassembly comprises a first port, a second port and a third port; the optical transceiver includes an optical receiving unit and an optical transmitting unit. The light beams of the optical receiving unit incidents from the fiber ferrule to the first port of the circulator, then output to multiplexer/demultiplexer through the second port of the circulator subassembly. The light beams is then split by the multiplexer/de-multiplexer and received by the receiver optical subassembly. The light beams of the transmitting unit input to the multiplexer/de-multiplexer from the transmitter optical subassembly. After combined by the multiplexer/de-multiplexer, the light beams incident into the third port of the circulator subassembly. Then the light beams output from the first port of the circulator subassembly and input to the fiber ferrule.

In one aspect of the present patent application, the first port of the three-port circulator subassembly is bi-directional input/output port, the second port is a unidirectional port of output beams, and the third port is a unidirectional port of input beams.

In another aspect of the present patent application, the three-port circulator subassembly, the circulator subassembly further comprises a polarizer, a nonreciprocal polarization rotator and a polarization analyzer.

In another aspect of the present patent application, the polarizer is a polarization splitting prism, a birefringent crystal or a polarizer.

In another aspect of the present patent application, the nonreciprocal polarization rotator is a Faraday rotator or a combination of a Faraday rotator and a 1/2 wave plate.

In yet another aspect of the present patent application, the polarization analyzer is preferably a polarization splitting prism or a birefringent crystal.

In another aspect of the present patent application, the multiplexer/de-multiplexer is thin-film filters which include at least one thin-film filter, or a planar lightwave circuit (PLC) chip, or a grating.

In another aspect of the present patent application, the multiplexer/de-multiplexer is a Coarse Wavelength Division Multiplexer (CWDM), a Dense Wavelength Division Multiplexer (DWDM) or any signal frequency Wavelength Division Multiplexer (WDM).

In another aspect of the present patent application, the multiplexer/demultiplexer subassembly and the optical receiving subassembly are integrated in a PLC chip. The present patent application discloses another optical transceiver which comprises a fiber ferrule, a circulator subassembly, a multiplexer/de-multiplexer, a receiver optical subassembly and a transmitter optical subassembly. The circulator subassembly includes three ports, namely, the first port, the second port and the third port. The optical transceiver module includes optical receiving unit and optical transmitting unit. The light beams of the optical receiving unit incident from the fiber ferrule to the multiplexer/de-multiplexer. The light beams is then split by the multiplexer/de-multiplexer and input to the first port of the circulator subassembly. Then the light beams output to the receiver optical subassembly through the second port of the circulator subassembly. The receiver optical subassembly receives the optical signal. The light beams of the transmitting unit input to the third port of the circulator subassembly from the transmitter optical subassembly and output from the first port a of the circulator subassembly. The light beams is then input to the multiplexer/de-multiplexer and combined by the multiplexer/de-multiplexer. Then the light beams incident into the fiber ferrule.

Comparing with the prior art, the optical transceiver module of the present patent application have below advantages and positive effects. By using single-fiber for coupling, fiber coiling risk of dual-fibers is avoided. In addition, integrating the circulator subassembly into the optical transceiver module reduces the volume of the integrated device. The optical transceiver module of the present patent application can perform multiple wavelengths coupling for S-band, C-band and L-band. Each of these bands can include multiple channels, for example, 2-channels, 4-channels, 8-channels, 16-channels and etc.

### Brief Description of the Drawings

Figure 1 is a schematic diagram of an existing optical transceiver module.
Figure 2 is the schematic diagram of the optical transceiver module in the first embodiment of the present patent application.
Figure 3a is the top view of the optical receiving unit of the optical transceiver module in the first embodiment of the present patent application.
Figure 3b is the side view of the optical receiving unit of the optical transceiver module in the first embodiment of the present patent application.
Figure 4 is a partial side view of the optical transmitting unit of the optical transceiver module in the first embodiment of the present patent application.
Figure 5 is the schematic diagram of the optical transceiver module in the second embodiment of the present patent application.

### Detailed Description

The principles of the present patent application will be further described with reference to the drawings and embodiments.

As shown in Fig. 2, the dual-fiber coupled multi-wavelength optical transceiver module of the first embodiment of the present patent application, comprise a fiber ferrule 1, a circulator subassembly 2, a multiplexer/de-multiplexer 3, a receiver optical subassembly 4 and a transmitter optical subassembly 5. The circulator subassembly 2 includes three ports, namely, the first port a, the second port b and the third port c. The first port a is a bidirectional port of the input and output beams. The second port b is a unidirectional port of output beams. The third port is a unidirectional port of input beams. The optical transceiver module of the present patent application includes optical receiving unit and optical transmitting unit. The light beams of the receiving unit incident from the fiber ferrule 1 to the first port a of the circulator subassembly 2, then output to the multiplexer/de-multiplexer 3 through the second port b of the circulator subassembly 2. The light beams is then split by the multiplexer/de-multiplexer 3 and received by the receiver optical subassembly 4. The light beams of the transmitting unit input to the multiplexer/de-multiplexer 3 from the transmitter optical subassembly 5. After combined by the multiplexer/de-multiplexer 3, the light beams incident into the third port c of the circulator subassembly 2. Then the light beams output from the first port a of the circulator subassembly 2 and input to the fiber ferrule 1.

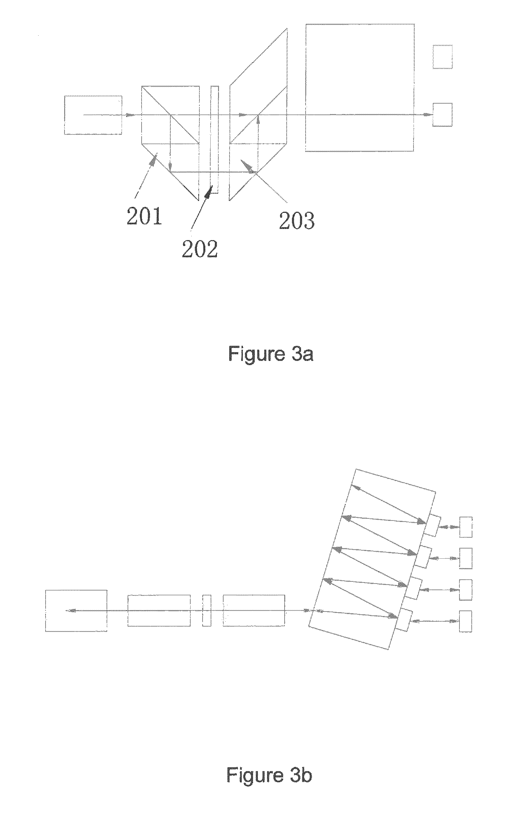

Figures 3a and 3b are the top view and side view of the optical receiving unit of the optical transceiver module in the present patent application. The circulator subassembly 2 further comprises a polarizer 21, a nonreciprocal polarization rotator 22 and a polarization analyzer 23. The light beams incident into the first port a of the circulator subassembly 2 through the fiber ferrule 1. Then the light beams are polarization split by the polarizer 21 and output linear polarized light to the nonreciprocal polarization rotator 22. After output to the polarization analyzer 23 for polarization analysis from the nonreciprocal polarization rotator 22, the linear polarized light is output to the multiplexer/de-multiplexer 3 through the second port b. The light beams is split by the multiplexer/de-multiplexer 3and received by the receiver optical subassembly 4. Further, the polarizer 21 is preferably a polarization splitting prism (PBS), a birefringent crystal or a polarizing film, the nonreciprocal polarization rotator 22 is preferably a Faraday rotator or a combination of a Faraday rotator and a 1/2 wave plate, the polarization analyzer 23 is preferably a polarization splitting prism (PBS) or a birefringent crystal.

The multiplexer/de-multiplexer 3 is preferably thin-film filters which include at least one thin-film filter, or a planar lightwave circuit (PLC) chip. The multiplexer/de-multiplexer 3 and the receiver optical subassembly 4 can be integrated in a PLC in the same chip, or preferably to be a grating.

Alternatively, the multiplexer/de-multiplexer 3 is preferably a Coarse Wavelength Division Multiplexer (CWDM), a Dense Wavelength Division Multiplexer (DWDM) or any signal frequency WDM (WDM).

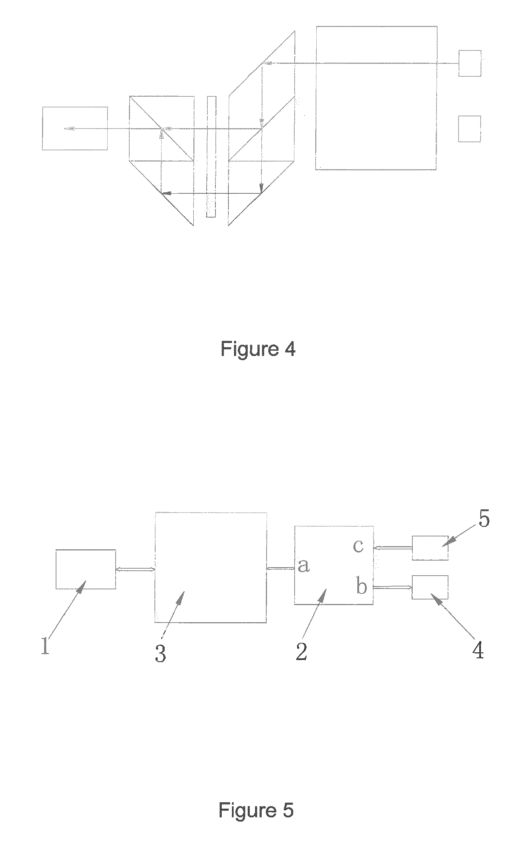

Figures 4 is the side view of the optical transmitting unit of the optical transceiver module in the present patent application. The light beams input to the multiplexer/de-multiplexer 3 from the transmitter optical subassembly 5. After combined by the multiplexer/de-multiplexer 3, the light beams incident into the third port c of the circulator subassembly 2. The light beams are then polarization split by the polarization analyzer 23 and output linear polarized light to the nonreciprocal polarization rotator 22. After rotated with 90 degree by the nonreciprocal polarization rotator 22, the light beams output to the polarizer 21. Then the light beams output to the fiber ferrule 1 through the first port a of the circulator subassembly 2 and emit out of the optical transceiver module through the fiber ferrule 1.

Figures 5 is the schematic view of the optical transceiver module in the embodiment 2 of the present patent application. As shown in Figure 5, the optical transceiver module comprises a fiber ferrule 1, a circulator subassembly 2, a multiplexer/de-multiplexer 3, a receiver optical subassembly 4 and a transmitter optical subassembly 5. The circulator subassembly 2 includes three ports, namely, the first port a, the second port b and the third port c. The first port a is a bidirectional port of the input and output beams. The second port b is a unidirectional port of output beams. The third port is a unidirectional port of input beams. The optical transceiver module of the present patent application includes optical receiving unit and optical transmitting unit. The light beams of the receiving unit incident from the fiber ferrule 1 to the multiplexer/de-multiplexer 3. The light beams is then split by the multiplexer/de-multiplexer 3 and input to the first port a of the circulator subassembly 2. Then the light beams output to the receiver optical subassembly 4 through the second port b of the circulator subassembly 2. The receiver optical subassembly 4 receives the optical signal. The light beams of the transmitting unit input to the third port c of the circulator subassembly 2 from the transmitter optical subassembly 5 and output from the first port a of the circulator subassembly 2. The light beams is then input to the multiplexer/de-multiplexer 3 and combined by the multiplexer/de-multiplexer 3. Then the light beams incident into the fiber ferrule 1 and output. The detailed structure of the components of the embodiment 2 is the same as that of the embodiment 1.

Comparing with the prior art, the optical transceiver module of the present patent application have below advantages and positive effects. By using single-fiber for coupling, fiber coiling risk of dual-fibers is avoided. In addition, integrating the circulator subassembly into the optical transceiver module reduces the volume of the integrated device. The optical transceiver module of the present patent application can perform multiple wavelengths coupling for S-band, C-band and L-band. Each of these bands can include multiple channels, for example, 2-channels, 4-channels, 8-channels, 16-channels and etc.

The present invention has been described in terms of preferred embodiments. The described embodiments are not intended to restrict the scope of the present invention. It is recognized the equivalents, alternatives and modifications based on the present invention are within the scope of the appending claims.

## Claims

1. A single-fiber coupled multi-wavelength optical transceiver, comprising a fiber ferrule, a circulator subassembly, a multiplexer/demultiplexer subassembly, an optical transmitting subassembly and an optical receiving subassembly, wherein the circulator subassembly comprises a first port, a second port and a third port; the optical transceiver comprises an optical receiving unit and an optical transmitting unit; the light beams of the optical receiving unit incidents from the fiber ferrule to the first port of the circulator, then output to multiplexer/demultiplexer through the second port of the circulator subassembly, the light beams is then split by the multiplexer/de-multiplexer and received by the receiver optical subassembly; the light beams of the transmitting unit input to the multiplexer/de-multiplexer from the transmitter optical subassembly, after combined by the multiplexer/de-multiplexer, the light beams incident into the third port of the circulator subassembly, then the light beams output from the first port of the circulator subassembly and input to the fiber ferrule.

2. A single-fiber coupled multi-wavelength optical transceiver according to claim 1, wherein the first port of the three-port circulator subassembly is a bi-directional port of the input/output beams, the second port is a unidirectional port of output beams, and the third port is a unidirectional port of input beams.

3. A single-fiber coupled multi-wavelength optical transceiver according to claim 1, the circulator subassembly further comprises a polarizer, a nonreciprocal polarization rotator and a polarization analyzer.

4. A single-fiber coupled multi-wavelength optical transceiver according to claim 3, wherein the polarizer is a polarization splitting prism.

5. A single-fiber coupled multi-wavelength optical transceiver according to claim 3, wherein the polarizer is a birefringent crystal.

6. A single-fiber coupled multi-wavelength optical transceiver according to claim 3, wherein the polarizer is a polarizing film.

7. A single-fiber coupled multi-wavelength optical transceiver according to claim 3, wherein the nonreciprocal polarization rotator is a Faraday rotator.

8. A single-fiber coupled multi-wavelength optical transceiver according to claim 3, wherein the nonreciprocal polarization rotator is a combination of a Faraday rotator and a 1/2 wave plate.

9. A single-fiber coupled multi-wavelength optical transceiver according to claim 3, wherein the polarization analyzer is a polarization splitting prism.

10. A single-fiber coupled multi-wavelength optical transceiver according to claim 3, wherein the polarization analyzer is a birefringent crystal.

11. A single-fiber coupled multi-wavelength optical transceiver according to claim 1, wherein the multiplexer/de-multiplexer is thin-film filter assembly.

12. A single-fiber coupled multi-wavelength optical transceiver according to claim 11, wherein the thin-film filter assembly comprises at least one thin-film filter.

13. A single-fiber coupled multi-wavelength optical transceiver according to claim 1, wherein the multiplexer/de-multiplexer is a planar lightwave circuit (PLC) chip.

14. A single-fiber coupled multi-wavelength optical transceiver according to claim 1, wherein the multiplexer/de-multiplexer is a grating.

15. A single-fiber coupled multi-wavelength optical transceiver according to claim 1, wherein the multiplexer/de-multiplexer is a Coarse Wavelength Division Multiplexer (CWDM).

16. A single-fiber coupled multi-wavelength optical transceiver according to claim 1, wherein the multiplexer/de-multiplexer is a Dense Wavelength Division Multiplexer (DWDM).

17. A single-fiber coupled multi-wavelength optical transceiver according to claim 1, wherein the multiplexer/de-multiplexer is any signal frequency Wavelength Division Multiplexer (WDM).

18. A single-fiber coupled multi-wavelength optical transceiver according to claim 1, wherein the multiplexer/demultiplexer subassembly and the optical receiving subassembly are integrated in a PLC chip.

19. A single-fiber coupled multi-wavelength optical transceiver, comprising a fiber ferrule, a circulator subassembly, a multiplexer/de-multiplexer, a receiver optical subassembly and a transmitter optical subassembly, wherein the circulator subassembly includes three ports, namely, the first port, the second port and the third port; the optical transceiver comprises optical receiving unit and optical transmitting unit; the light beams of the optical receiving unit incident from the fiber ferrule to the multiplexer/de-multiplexer, the light beams is then split by the multiplexer/de-multiplexer and input to the first port of the circulator subassembly, then the light beams output to the receiver optical subassembly through the second port of the circulator subassembly, the receiver optical subassembly receives the optical signal; the light beams of the transmitting unit input to the third port of the circulator subassembly from the transmitter optical subassembly and output from the first port of the circulator subassembly, the light beams then input to the multiplexer/de-multiplexer and are combined by the multiplexer/de-multiplexer, then the light beams incident into the fiber ferrule.
